(19) Europäisches Patentamt
European Patent Office
Office européen des brevets

(11) Veröffentlichungsnummer: **0 481 408 A2**

# (12) EUROPÄISCHE PATENTANMELDUNG

(21) Anmeldenummer: **91117503.2**

(22) Anmeldetag: **14.10.91**

(51) Int. Cl.5: **C08F 283/00**, C08F 8/12, C08L 51/08, C09J 151/08, //(C08F283/00,218:04)

(30) Priorität: **17.10.90 DE 4032908**

(43) Veröffentlichungstag der Anmeldung: **22.04.92 Patentblatt 92/17**

(84) Benannte Vertragsstaaten: **AT BE CH DE ES FR GB IT LI NL SE**

(71) Anmelder: **HOECHST AKTIENGESELLSCHAFT**
**Postfach 80 03 20**
**W-6230 Frankfurt am Main 80(DE)**

(72) Erfinder: **Kroggel, Matthias, Dr.**
**Am Flachsland 15**
**W-6233 Kelkheim(DE)**

(54) **Pfropfpolymerisate auf carboxylgruppenhaltigen Polyurethanpfropfgrundlagen, Verfahren zu ihrer Herstellung und ihre Verwendung.**

(57) Carboxylgruppen enthaltende Pfropfpolymerisate, bei denen Carbonsäurevinylester und gegebenenfalls weitere ethylenisch ungesättigte Monomere mittels radikalisch initiierter Pfropfpolymerisation auf carboxylgruppenhaltige Polyurethanpfropfgrundlagen polymer aufgepfropft sind, sowie Verseifungsprodukte und Salze dieser carboxylgruppenhaltigen Pfropfpolymerisate können erhalten werden, indem man auf eine carboxylgruppenhaltige Polyurethanpfropf grundlage, die mindestens 2 Urethangruppen im Molekül enthält, Carbonsäurevinylester mit 3 bis 20 C-Atomen und gegebenenfalls weitere ethylenisch ungesättigte polymerisationsfähige Monomere, die gegebenenfalls copolymerisationsfähig sind, in Mengen von vorzugsweise 10 bis 95 Gew.-%, bezogen auf das carboxylgruppenhaltige Pfropfpolymerisat, durch radikalisch initiierte Pfropfpolymerisation aufpfropft und gegebenenfalls anschließend in den aufgepfropften Polymerresten der Pfropfpolymerisate die Vinylestereinheiten und gegebenenfalls weitere verseifbare Monomereinheiten teilweise oder vollständig durch Hydrolyse und/oder Alkoholyse verseift bzw. die Carboxylgruppen in Salze überführt. Bevorzugt aufzupfropfende Vinylester sind Vinylacetat und/oder Vinylpropionat und gegebenenfalls Versaticsäurevinylester.

Die Pfropfpolymerisation erfolgt vorzugsweise in Lösung oder in Substanz.

Unverseifte Pfropfpolymerisate eignen sich u.a. als Klebstoff, insbesondere als Schmelzklebstoff, sowie in ihren wasserlöslichen bzw. wasserdispergierbaren Salzformen als Dispergiermittel. Voll- und teilverseifte Pfropfpolymerisate eignen sich u.a. zur Herstellung von Folien. In Abhängigkeit von dem Carboxylgruppengehalt der Polyurethanpfropfgrundlage, dem Pfropfungsgrad, dem Hydrolysegrad sowie der Art der gepfropften Monomeren besitzen die Pfropfpolymerisate, vergleichsweise zu Polyvinylalkohol, deutlich verbesserte Löslichkeiten in wäßrigalkalischen Medien sowie erniedrigte Schmelzpunkte, so daß sie vorteilhaft zur Herstellung von Preß- und Extrusionsfolien unter milden Temperaturbedingungen ohne die Mitverwendung organischer Weichmacher geeignet sind. Verseifte Pfropfpolymerisate eignen sich u.a. ferner als Klebstoffe, als Dispergiermittel in wäßrigalkalischen Medien sowie als Schlichtemittel und Schmälzmittel in der Textilverarbeitung.

EP 0 481 408 A2

Die Erfindung betrifft Pfropfpolymerisate, bei denen Carbonsäurevinylester und gegebenenfalls weitere ethylenisch ungesättigte Monomere mittels radikalisch initiierter Pfropfpolymerisation auf Carboxylgruppen enthaltende Polyurethanpfropfgrundlagen polymer aufgepfropft sind, sowie Verseifungsprodukte der Pfropfpolymerisate, insbesondere Pfropfpolyvinylalkohole, Verfahren zu ihrer Herstellung und ihre Verwendung. Gegenstand der Erfindung sind u.a. auch alle in den Patentansprüchen geoffenbarten und beanspruchten Gegenstände.

Bekanntlich finden Polyvinylcarbonsäureester, insbesondere Polyvinylacetate, und Polyvinylalkohole in vielfältiger Weise technische Anwendung. Ähnliche Verwendungsmöglichkeiten sind für entsprechende Polyvinylcarbonsäureester bzw. Polyvinylalkohole, die auf Polyurethanpfropfgrundlagen aufgepfropft sind, bekannt.

So werden z.B. Polyvinylacetate als Klebstoffe verwendet, Polyvinylalkohole finden je nach Molekulargewicht, in Abhängigkeit vom Hydrolysegrad und gegebenenfalls einpolymerisierten Comonomeren, als Klebstoffe, Textilhilfsmittel oder als Folienrohstoff Verwendung.

Je nach Einsatzgebiet weisen z.B. Polyvinylalkohole häufig unzureichende Eigenschaften auf, die ihre Einsatzmöglichkeiten bzw. ihre Verwendbarkeit deutlich einschränken und teilweise verhindern. So ist die Wasserlöslichkeit von Polyvinylalkoholen beispielsweise bei ihrer Verwendung als Schlichte häufig zu gering, bei Verwendung als Klebstoff häufig zu hoch. Ein sehr wesentlicher Nachteil von üblichen Polyvinylalkoholen ist ferner deren Schwerlöslichkeit in wäßrigen Alkalien, wie z.B. in wäßriger Natronlauge. Dieser Nachteil kann z.B. durch die Verwendung von copolymeren Pfropfpolyvinylalkoholen auf Polyurethanpfropfgrundlagen behoben werden.

Pfropfpolymerisate auf Polyurethanpfropfgrundlagen sind bekannt und lassen sich z.B. durch radikalisch initiierte Polymerisation von ethylenisch ungesättigten Monomeren in Gegenwart von Polyurethanen, die Monomereinheiten aus Diisocyanaten und Diolen sowie mindestens 2 Urethangruppen im Molekül enthalten, herstellen. Setzt man bei der radikalischen Polymerisation Vinylester als Monomere ein, so erhält man Pfropfpolyvinylester. Aus der EP-OS 0 308 832 ist bekannt, daß man solche Pfropfpolyvinylester durch Verseifung bzw. Umesterung in die entsprechenden Pfropfpolyvinylalkohole überführen kann. Die Wasserlöslichkeit der hierbei erhältlichen Pfropfpolymerisate, insbesondere in wäßrig-alkalischen Medien, ist jedoch in manchen Fällen unbefriedigend. Eine Verbesserung der Löslichkeit kann z.B. durch copolymere Pfropfung der Polyurethane mit Vinylestern in Kombination mit ethylenisch ungesättigten Carbonsäuren oder Carbonsäurederivaten und deren nachfolgende Überführung in Pfropfpolyvinylalkohole erreicht werden.

Nachteilig wirkt sich bei diesem Verfahren aus, daß bei der radikalischen Copolymerisation der Umsatz der ungesättigten Carbonsäuren bzw. der Carbonsäurederivate nicht quantitativ erfolgt und dadurch Reste der Monomeren im polymeren Reaktionsprodukt verbleiben. Werden daher die Reaktionsmischungen nicht unter entsprechender Monomereneliminierung aufgearbeitet, so verbleiben niedermolekulare Ausgangssubstanzen im Endprodukt, was sich negativ auf die Produktqualität des Pfropfpolymerisats auswirken kann. Sollen die Restmonomeren destillativ abgetrennt werden, so können sich die monomeren ungesättigten Carbonsäuren bzw. deren Derivate, insbesondere bei großtechnischer Verfahrensausführung, in bestimmten Kolonnenböden anreichern und besonders bei freien Säuren an diesen Stellen zu starken Korrosionen führen.

Beim Einsatz von Carbonsäurederivaten, wie z.B. ungesättigten Carbonsäureestern, muß zur Freisetzung der Carboxylfunktion eine Verseifung oder Umesterung an die eigentliche Polymerisation angeschlossen werden. Hierbei kann es auch zu einer Verseifung bzw. Umesterung von copolymerisierten Vinylestereinheiten kommen, d.h. daß auf diesem Wege carboxylgruppenhaltige Polyvinylester nicht in befriedigendem Maße erhältlich sind. Auch aufgrund von ungünstigen Copolymerisationsparametern und/oder infolge der den Polymerisationsverlauf regelnden Wirkung ungesättigter Carbonsäuren ist die Copolymerisation von Vinylestern mit ungesättigten Carbonsäuren bzw. Carbonsäurederivaten nicht problemlos möglich und erfordert meist spezielle bzw. aufwendige Verfahren.

Der Erfindung lag somit die Aufgabe zugrunde, Carboxylgruppen enthaltende Pfropfpolyvinylester zu erhalten, deren Herstellung ohne die vorstehenden Nachteile möglich ist und in deren Verlauf insbesondere keine unerwünschten bzw. nachteiligen Hydrolyse- oder Verseifungsreaktionen an den copolymerisierten Vinylestereinheiten auftreten und die resultierenden Pfropfpolymerisate den benötigten Carboxylgruppengehalt aufweisen und keine aufwendigen Aufarbeitungsmaßnahmen erfordern.

Es wurde nun überraschenderweise gefunden, daß sich die aufgeführten Nachteile vermeiden lassen, wenn man die für eine verbesserte Löslichkeit der Polymerisate in wäßrigen alkalischen Medien erforderlichen Carboxylgruppen nicht durch radikalisch initiierte Copolymerisation von Carboxylgruppen tragenden ethylenisch ungesättigten Monomeren in die aufgepfropften Seitenketten der Pfropfpolymerisate einbaut, sondern daß man von carboxylgruppenhaltigen Polyurethanpfropfgrundlagen, vorugsweise carboxylgruppenhaltigen Polyetherurethanpfropfgrundlagen, ausgeht und auf diese ethylenisch ungesättigte carboxylgruppenfreie Monomereinheiten aufpfropft. Verwendet man als carboxylgruppenfreie Monomere hierbei Vinylester, so gelangt man ohne unerwünschte Verseifungs- bzw. Umesterungsnebenreaktionen an den Vinylestermonomereinheiten zu den die benötigten Carboxylgruppengehalte aufweisenden Pfropfpolyvinylestern, die nachfolgend zu entsprechenden Pfropfpolyvinylalkoholen verseift bzw. umgeestert werden können.

Die Carboxylgruppen aufweisenden Polyurethanpfropfgrundlagen sollten mindestens 2 Urethangruppen pro Molekül enthalten, wobei die Anzahl der Urethangruppen pro Pfropfgrundlagenmolekül nach oben keiner besonderen Begrenzung unterliegt und im allgemeinen höhere Werte als 2 annehmen kann. Carboxylgruppenhaltige Polyurethane sind bereits bekannt (vgl. z.B. US-PS 3 412 054, US-PS 4 408 008, DE-PS 3 641 494) und lassen sich beispielsweise durch Umsetzung von Diisocyanaten mit Dimethylolcarbonsäuren oder Polymethylolcarbonsäuren, vorzugsweise Dimethylolcarbonsäuren, sowie gegebenenfalls mit weiteren gegenüber Isocyanatgruppen polyfunktionell wasserstoffaktiven Verbindungen herstellen. Bevorzugt sind Dimethylolcarbonsäuren der Formel I,

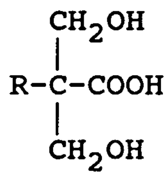

(I)

worin

R = $(C_1-C_4)$-Alkyl oder $(C_6-C_{12})$-Aryl, vorzugs weise $(C_1-C_4)$-Alkyl, insbesondere Methyl, bedeutet.

Besonders bevorzugte Verbindung der Formel I ist 2,2-Bis(hydroxymethyl)-propionsäure.

Die Synthese der Polyurethane kann nach üblichen literaturbekannten Methoden durchgeführt werden. Bevorzugt wird sie aber in Substanz bei Temperaturen zwischen 80 und 125 °C durchgeführt. In manchen Fällen kann der Einsatz von Katalysatoren, wie sie üblicherweise bei der Polyurethansynthese eingesetzt werden, vorteilhaft sein. Hierbei ist prinzipiell der Einsatz von tertiären Aminen als Katalysator möglich, wobei zu beachten ist, daß die Carbonsäuregruppen der Dimethylol- oder Polymethylolcarbonsäuren mit den Aminen Salze bilden und die Amine dadurch nicht katalytisch wirksam werden können. Es muß daher ein Aminüberschuß verwendet oder die Carbonsäuren müßen zuvor in stabile Salzformen übergeführt werden.

Als Isocyanate können alle aromatischen, aliphatischen und cycloaliphatischen Di- und Polyisocyanate, wie sie üblicherweise für die Synthese von Polyurethanen Verwendung finden, eingesetzt werden, vorzugsweise aber Diisocyanate, insbesondere z.B. 1,5-Naphthylendiisocyanat, 4,4'-Diphenylmethandiisocyanat, 4,4'-Diphenylmethandimethyldiisocyanat, Di- und Tetraalkyldiphenylmethandiisocyanat, 4,4'-Dibenzyldiisocyanat, 1,3-Phenylendiisocyanat, 1,4-Phenylendiisocyanat, Toluylendiisocyanat, m- und p-Diisocyanatoxylol. Besonders bevorzugt ist der Einsatz von aliphatischen und cycloaliphatischen Diisocyanaten mit 2 bis 12 C-Atomen im aliphatischen Rest, vorzugsweise z.B. Ethylendiisocyanat, Propylendiisocyanat, Butylendiisocyanat, 2,2,4-Trimethylhexamethylendiisocyanat, 1,4-Diisocyanatocyclohexan, 4,4'-Methylen-bis-(cyclohexyldiisocyanat), 1-Methyl-2,4-cyclohexyldiisocyanat, 1-Methyl-2,6-cyclohexyldiisocyanat, 1,3-Bis-(isocyanatomethyl)-cyclohexan,1,6-Hexamethylendiisocyanat.

Besonders bevorzugt ist die Verwendung von Isophorondiisocyanat.

Die aufgeführten Isocyanate können einzeln oder in Kombination bzw. in Mischung eingesetzt werden.

Als Komponenten mit gegenüber Isocyanatgruppen aktivem Wasserstoff eignen sich ein- und mehrfachfunktionelle Thiolverbindungen oder insbesondere Hydroxylverbindungen, vorzugsweise alkoholische Hydroxylverbindungen.

Als mehrfachfunktionelle Komponenten mit Hydroxylgruppen sind alle üblicherweise für die Synthese von Polyurethanen einsetzbaren aromatischen, aliphatischen und cycloaliphatischen Polyole verwendbar. Bevorzugt sind Polyalkylenoxide des Propylens und Butylens, Mischpolymere aus Ethylenoxid, Propylenoxid und Butylenoxid, vorzugsweise deren Blockcopolymere, besonders bevorzugt sind Polyethylenoxide. Vorzugsweise werden Polyethylenoxide mit gewichtsmittleren Molekulargewichten zwischen 200 und 10000 g/mol verwendet, wobei Polyethylenoxide mit Molekulargewichten von 300 bis 1500 g/mol besonders bevorzugt sind. Bevorzugt sind ferner cycloaliphatische Diole, wie z.B. Cyclohexandiole, sowie aliphatische Diole mit 2 bis 12 C-Atomen, z.B. 1,3-Propandiol, 1,2-Propandiol, Ethylenglykol, Diethylenglykol, Triethylenglykol, Hexylenglykol und andere. Besonders bevorzugt ist der Einsatz von Diolen mit primären OH-Gruppen, wie z.B. 1,4-Butandiol. Darüber hinaus sind bei der Polyurethansynthese auch niedermolekulare polyfunktionelle Thiole, insbesondere aber Dithiole sowie mehrfachfunktionelle Hydroxymerkaptane, insbesondere bifunktionelle Hydroxymerkaptane, wie z.B. 2-Merkaptoethanol, einsetzbar.

Das Verhältnis der Anzahl von Gruppen mit gegenüber NCO-Gruppen aktivem Wasserstoff zur Anzahl der vorhandenen Isocyanatgruppen liegt bei 1 : 1, vorzugsweise zwischen 1 : 0,99 und 1 : 0,5, insbesondere aber zwischen 1 : 0,98 und 1 : 0,7. Setzt man die genannten Komponenten in den angegebenen stöchiometrischen Verhältnissen ein und läßt die reaktiven Gruppen vollständig abreagieren, dann erhält man isocyanatgruppenfreie Polyurethane. Prinzipiell ist es aber auch möglich, durch nicht vollständigen Umsatz der Reaktanden oder durch Einsatz der Isocyanatkomponenten im stöchiometrischen Überschuß isocyanatgruppenhaltige Polyurethane zu erhalten, die ebenfalls in der Pfropfreaktion eingesetzt werden können. Man gelangt dann auf diesem Wege zu isocyanatgruppenhaltigen Pfropfpolymeren, die aufgrund der vorhandenen Isocyanatgruppen z.B. für Vernetzungsreaktionen eingesetzt werden können oder die an den Isocyanatgruppen mit H-aktiven Verbindungen weiter umgesetzt werden können.

Das Molverhältnis der erfindungsgemäß vorzugsweise eingesetzten Dimethylolcarbonsäuren zu den restlichen Monomereinheiten in den Polyurethanpfropfgrundlagen liegt zwischen 1 : X mit X $\geqq$ 30 und 1 : 1, vorzugsweise zwischen 1 : 30 und 1 : 1,8, insbesondere zwischen 1 : 5,4 und 1 : 2,7.

Werden Kettenverlängerer, wie z.B. niedermolekulare Diole oder Dithiole (z.B. 1,4-Butandiol), zusammen mit Polyalkylenglykolen in den Polymerverband eingebaut, so sollte das molare Verhältnis der Kettenverlängerer zu dem Polyalkylenglykol zwischen 1 : X mit X $\geqq$ 8 und 1 : 1, vorzugsweise zwischen 1 : 8 und 1 : 1 liegen.

Die mittleren Molekulargewichte der Polyurethane können prinzipiell, in Abhängigkeit von der Stöchiometrie der eingesetzten Reaktanden, innerhalb eines breiten Bereichs liegen und sind nicht kritisch. Gegebenenfalls sind den Herstellungsverfahren durch die Höhe der Viskositäten Grenzen gesetzt, bei deren Überschreitung eine Weiterverarbeitung der Produkte schwierig werden kann. Aus diesem Grunde liegen die Molekulargewichte der Polyurethanpfropfgrundlagen vorzugsweise zwischen 3000 und 50000 g/mol, insbesondere zwischen 5000 und 30000 g/mol. Die Ermittlung der mittleren Molekulargewichte erfolgt rechnerisch in üblicher Weise auf Basis der Stöchiometrie.

Neben dem Einsatz mehrfachfunktioneller Hydroxykomponenten können in geringen Mengen auch aromatische, aliphatische oder cycloaliphatische Monohydroxyverbindungen eingesetzt werden. Vorzugsweise werden hier solche mit 1 bis 12 C-Atomen, wie z.B. Methanol, Ethanol, Propanol, Butanol, Cyclohexanol, Hexanol, Oktanol, Dodekanol und andere eingesetzt, aber auch teilveresterte oder teilveretherte Polyole können Verwendung finden. Darüber hinaus sind auch monofunktionelle Isocyanate, vorzugsweise solche mit 2 bis 12 C-Atomen, wie z.B. Ethylisocyanat, Propylisocyanat, Butylisocyanat, Pentylisocyanat, Hexylisocyanat, Phenylisocyanat sowie monofunktionelle Thiole, vorzugsweise solche mit 1 bis 12 C-Atomen, wie z.B. Methylmerkaptan, Ethylmerkaptan, einsetzbar. Über die Menge an eingesetzten monofunktionellen Verbindungen kann das Molekulargewicht der Polyurethane gesteuert werden.

Zur Pfropfung auf die Polyurethanpfropfgrundlage werden radikalisch polymerisierbare ethylenisch ungesättigte Monomere, vorzugsweise Vinylcarbonsäureester mit 3 bis 20 C-Atomen, eingesetzt. Besonders bevorzugt sind Vinylacetat und/oder Vinylpropionat. Außerdem lassen sich Gemische von Vinylcarbonsäurestern, wie z.B. Vinylacetat/Versaticsäurevinylester, pfropfen, oder Gemische aus Vinylcarbonsäureestern mit weiteren ethylenisch ungesättigten und vorzugsweise copolymerisationsfähigen Monomeren, wie z.B. Ethylen, Styrol, Acrylnitril, Vinylchlorid, Vinylidenchlorid, Maleinsäurediester und/oder Fumarsäurediester mit ($C_1$-$C_{22}$)-Alkoholen, (Meth-)Acrylsäureester, Crotonsäureester und Allylester.

Die Pfropfung wird durch radikalisch initiierte Polymerisation der ethylenisch ungesättigten Monomeren in Gegenwart bzw. in Mischung mit der Polyurethanpfropfgrundlage unter Verwendung von Radikalketten startenden Initiatoren durchgeführt, wobei hierfür vorzugsweise die in den ethylenisch ungesättigten Monomeren bzw. Monomerenmischungen bzw. Monomerenlösungen löslichen Radikalbildner Verwendung finden können. Besonders bevorzugt sind organische Peroxide, organische Percarbonate und organische Azoverbindungen. Bevorzugt werden Azo-bis-isobutyronitril sowie tert.-Butyl-2-ethylhexanoat eingesetzt, besonders bevorzugt ist die Verwendung von Dibenzoylperoxid. Die Pfropfreaktion wir unter Zusatz von vorzugsweise 0,013 bis 1,3 Mol.-%, insbesondere 0,026 bis 0,27 Mol.-%, Initiator, bezogen auf die gesamte Monomerenmenge, durchgeführt.

Pfropfpolymerisate, die verseifbare Monomereinheiten enthalten, lassen sich durch Hydrolyse, Alkoholyse oder Umesterung in teil- bzw. vollverseifte Produkte überführen, wobei der Hydrolysegrad mindestens 1 Mol.-%, vorzugsweise aber 50 bis 99 Mol.-%, bezogen auf die Summe der Molzahlen aller verseifbaren Monomereinheiten im Pfropfpolymerisat, beträgt.

Die Pfropfreaktion kann beispielsweise in Emulsion oder in Suspension erfolgen. Sie wird jedoch bevorzugt in Lösung und besonders bevorzugt in Substanz durchgeführt.

Die zu pfropfenden Monomeren werden vorzugsweise der im Reaktionsgefäß vorgelegten Pfropfgrundlage kontinuierlich oder diskontinuierlich zudosiert, wobei es vorteilhaft ist, die Dosiergeschwindigkeit und

die Verfahrensparameter so zu wählen, daß die Bildung von Homopolymerisaten weitgehend bzw. praktisch vollständig unterbleibt und die Monomeren unter radikalisch initiierter Addition an die Pfropfgrundlage auf dieser Polymerketten starten. Die Monomeren können, soweit sie in flüssiger Form vorliegen, in Substanz oder auch in Lösung zugesetzt werden. Der Initiator wird bevorzugt in der Monomerflüssigkeit bzw. der Monomerlösung gelöst und zusammen mit dieser zudosiert. Er kann aber auch im Reaktionsgefäß zusammen mit der Pfropfgrundlage, zumindest teilweise, vorgelegt werden. Die Pfropfreaktion wird in Abhängigkeit vom eingesetzten Katalysator und, insbesondere bei der Substanzpolymerisation, in Abhängigkeit von der eingesetzten Polyurethanpfropfgrundlage und deren Viskositätsverhalten, vorzugsweise bei Temperaturen zwischen 65 und 125 °C, insbesondere zwischen 65 und 100 °C, durchgeführt.

Alternativ ist auch Batch-Polymerisation möglich, wobei dieses Verfahren stärker zu Gemischen von Pfropfpolymerisaten und Homopolymerisaten bzw. Copolymerisaten aus den eingesetzten Monomeren führen kann.

Die bei der Pfropfpolymerisation auftretende Viskositätserhöhung der Reaktionsmischung, insbesondere bei der Substanzpolymerisation, führt häufig zu Verarbeitungsproblemen, die im allgemeinen z.B. durch kontinuierliche oder diskontinuierliche Zugabe von Lösungsmitteln umgangen werden können. Als Lösungsmittel eignen sich vorzugsweise monofunktionelle Alkohole, wie z.B. Methanol, Ethanol, Propanol, Isopropanol, Butanol. Es können aber vorteilhaft auch andere organische Lösungsmittel eingesetzt werden, wie z.B. aliphatische und aromatische Kohlenwasserstoffe, Tetrahydrofuran, Dioxan, Essigsäureester und Aceton.

Bei der Lösungspfropfpolymerisation sollte der Lösungsmittelanteil im Reaktionsgemisch unter 20 Gew.-%, vorzugsweise unter 10 Gew.-%, bezogen auf die gesamte Reaktionsgemischsmenge, liegen.

Die erfindungsgemäßen Pfropfpolymerisate können nach Entfernen der Restmonomeren, vorzugsweise durch azeotrope Destillation mit Methanol, durch Eintragen der Reaktionsmischung in Wasser ausgefällt und abgetrennt werden. Alternativ kann das Lösungsmittel abdestilliert und das Pfropfpolymerisat aus dem Destillationsrückstand gewonnen werden.

Pfropfpolymerisate mit verseifbaren Strukturen können nach Lösen in einem Lösungsmittel, vorzugsweise einem niedermolekularen Alkohol, beispielsweise Methanol, Ethanol oder Isopropanol, mittels saurer Katalysatoren (z.B. Salzsäure, Phosphorsäure, Schwefelsäure, Salpetersäure, p-Toluolsulfonsäure) oder aber vorzugsweise unter Verwendung alkalischer Katalysatoren (z.B. NaOH, KOH, $NaOCH_3$, $KOCH_3$, primären, sekundären und tertiären Aminen) gegebenenfalls unter Mitverwendung von Wasser nach üblichen literaturbekannten Methoden in teil- bzw. vollverseifte Produkte, insbesondere Pfropfpolyvinylalkohole, übergeführt werden.

Bei Verwendung von Alkalihydroxiden als Verseifungskatalysator beträgt der Alkalihydroxidzusatz vorzugsweise 0,1 bis 20 Mol.-%, insbesondere 0,5 bis 10 Mol.-%, bezogen auf die Summe der Molzahlen der aufgepfropften verseifbaren Monomereinheiten. Es ist bei dieser Vorgehensweise zu beachten, daß bei der Verwendung von alkalischen Katalysatoren zunächst die im Polymerisat vorhandenen Carboxylgruppen vor der Verseifungs- bzw. Umesterungsreaktion mit Basen neutraliisert werden müssen. Die Verseifung bzw. Umesterung wird vorzugsweise bei Temperaturen zwischen 20 und 60 °C durchgeführt.

Die erfindungsgemäß erhaltenen unverseiften Pfropfpolymerisate eignen sich zur Verwendung als Klebstoff, wobei insbesondere ihr Einsatz als Schmelzklebstoff, gegebenenfalls unter Mitverwendung von Vernetzungskomponenten, von Interesse ist. Durch Variation von Molekulargewicht und Zusammensetzung der Polyurethanpfropfgrundlage, des Pfropfungsgrades und der Art der aufgepfropften Monomeren lassen sich Produkte mit stark differierenden Schmelzpunkten erhalten. Durch Neutralisation der Carboxylgruppen und deren Überführung in Salze, vorzugsweise Alkali-, Ammonium- oder Aminsalze, können wasserdispergierbare oder kolloidal wasserlösliche sowie alkalilösliche Pfropfpolymerisate erhalten werden. Sie eignen sich vorzugsweise als Dispergiermittel in wäßrigen Medien. Salze mit mehrwertigen Metallen sind wenig wasserlöslich und können zu Lack- und Beschichtungsharzen führen. Die Haftungstendenz der Pfropfpolymerisate auf den verschiedensten Materialien wird ebenfalls von der Art der Polyurethanpfropfgrundlage, des Pfropfungsgrades und der Art der aufgepfropften Monomeren beeinflußt. Beschichtungen und Folien lassen sich mittels wäßriger Alkalien leicht lösen und wieder entfernen.

Erfindungsgemäße voll- und teilverseifte Pfropfpolymerisate, eignen sich besonders für die Herstellung von Folien. Die Produkte besitzen, vergleichsweise zu nichtmodifizierten Polyvinylalkoholen, den Vorteil, daß sie in Abhängigkeit von der Polyurethanpfropfgrundlage, dem Pfropfungsgrad, dem Hydrolysegrad sowie in Abhängigkeit von der Art der gepfropften Monomeren deutlich abgesenkte Schmelzpunkte aufweisen, so daß Preß- und Extrusionsfolien unter milden Temperaturbedingungen hergestellt werden können. Außerdem sind in Abhängigkeit von den relevanten Parametern Folien mit differenzierten Eigenschaften der Alkalilöslichkiet, Wasserlöslichkeit, Reißfestigkeit, Dehnbarkeit und Gasbarriere, z.B. gegenüber Sauerstoff, erhältlich.

Aufgrund ihrer hohen Haftungstendenz auf Metallen lassen sich die Produkte vorteilhaft als Schmelzklebstoffe, vorzugsweise mit Vernetzungskomponenten, für die Verklebung von Metallen oder auch zur Beschichtung von Metallen einsetzen. Nicht vernetzte Beschichtungen lassen sich durch Behandeln mit wäßrigen Alkalien leicht wieder lösen und entfernen. Besonders vorteilhaft können Folien aus wasserlöslichen Salzen der Pfropfpolymerisate, insbesondere der Pfropfpolyvinylalkohole, als wasserlösliche Verpakkungselemente für Chemikalien, Waschmittel, Schädlingsbekämpfungsmittel etc. verwendet werden. Auch die Verwendung der Pfropfpolyvinylalkohole als Dispergiermittel in wäßrigen Medien, als Schlichtemittel oder als Schmälzmittel kann wegen der problemlosen Alkalilöslichkeit der Produkte zu überraschend vorteilhaften Resultaten bei der Textilverarbeitung führen.

Die Erfindung wird durch die nachstehenden Beispiele näher erläutert.

Die Grenzviskositätszahl [$\eta$] ("eta" = Intrinsic-Viskosität) wird in allen Beispielen im Ostwald-Viskosimeter bestimmt. Die Konzentrationen der gemessenen Lösungen werden dabei so gewählt, daß keine "Hagenbachkorrektur" durchgeführt werden muß.

Die Molekülgewichte M sind aus der Stöchiometrie der Komponenten errechnete gewichtsmittlere Molekulargewichte.

Die Bestimmung der Hydrolysegrade wird nach literaturbekannten Methoden durchgeführt, wobei die Polymeren mit Alkalilauge vollständig verseift werden.

Die Bestimmung der polymer gebundenen Carboxylgruppen erfolgt durch Ladungstitration an wäßrigen Polymerisatlösungen nach der SCD-Methode unter Verwendung eines Gerätes des Typs PCD 02 der Firma Mytek.

Beispiel 1

**Herstellung einer Carboxylgruppen enthaltenden Polyurethanpfropfgrundlage**

In einem Reaktionsgefäß mit Rührwerk werden unter Stickstoffatmosphäre 2147,7 g Polyethylenglykol (M = 630), 61,43 g 1,4-Butandiol und 365,82 g 2,2-Bis-(hydroxymethyl)-propionsäure vorgelegt und auf eine Temperatur von 115 °C erwärmt. Anschließend werden innerhalb von 5 Stunden 1364,03 g Isophorondiisocyanat solchermaßen zugetropft, daß die Temperatur der Reaktionsmischung 130 °C nicht überschreitet. Zur Vervollständigung der Reaktion wird das Reaktionsgemisch eine weitere Stunde bei 120 °C gerührt.

Die Vollständigkeit des Umsatzes und damit das Ende der Reaktion wird durch Analyse des Diisocyanatverbrauchs nach üblichen Methoden (IR-Spektroskopie, Titration) ermittelt.

Das erhaltene Polymere besitzt ein errechnetes Molekulargewicht M von 5777 g/mol und enthält im Durchschnitt 4 mol Carboxylgruppen pro mol Polyurethanpfropfgrundlage. Die Grenzviskositätszahl [$\eta$] beträgt 12,8 ml/g, ermittelt in methanolischer Lösung im Ostwald-Viskosimeter bei 25 °C.

Beispiel 2

**Herstellung einer Carboxylgruppen enthaltenden Polyurethanpfropfgrundlage**

Reaktionsführung analog Beispiel 1. Es werden 4413,2 g Polyethylenglykol (M = 630), 90,15 g 1,4-Butandiol, 268,2 g 2,2-Bis-(hydroxymethyl)-propionsäure und 2000,63 g Isophorondiisocyanat zur Umsetzung gebracht.

Das resultierende Polymere besitzt ein errechnetes Molekulargewicht M von 6769 g/mol und enthält im Durchschnitt 2 mol Carboxylgruppen pro mol Polyurethanpfropfgrundlage. Die Grenzviskositätszahl [$\eta$] beträgt 12,9 ml/g, ermittelt in methanolischer Lösung im Ostwald-Viskosimeter bei 25 °C.

Beispiel 3

**Herstellung einer Carboxylgruppen enthaltenden Polyurethanpfropfgrundlage**

Reaktionsführung analog Beispiel 1. Es werden 2100 g Polyethylenglykol (M = 630), 60,08 g 1,4-Butandiol, 357,69 g 2,2-Bis-(hydroxymethyl)-propionsäure und 1407,83 g Isophorondiisocyanat zur Umsetzung gebracht.

Das resultierende Polymere besitzt ein errechnetes Molekulargewicht M von 11777 g/mol und enthält im Durchschnitt 8 mol Carboxylgruppen pro mol Polyurethanpfropfgrundlage. Die Grenzviskositätszahl [$\eta$] beträgt 16,6 ml/g, ermittelt in methanolischer Lösung im Ostwald-Viskosimeter bei 25 °C.

Beispiel 4

**Herstellung einer carboxylgruppen enthaltenden Polyurethanpfropfgrundlage**

Reaktionsführung analog Beispiel 1. Es werden 2362,5 g Polyethylenglykol (M = 630), 67,59 g 1,4-Butandiol, 402,04 g 2,2-Bis-(hydroxymethyl)-propionsäure und 1611,6 g Isophorondiisocyanat zur Umsetzung gebracht.

Das resultierende Polymere besitzt ein errechnetes Molekulargewicht M von 17776 g/mol und enthält im Durchschnitt 12 mol Carboxylgruppen pro mol Polyurethanpfropfgrundlage. Die Grenzviskositätszahl [$\eta$] beträgt 18,8 ml/g, ermittelt in methanolischer Lösung im Ostwald-Viskosimeter bei 25 °C.

Beispiel 5

**Herstellung eines Pfropfpolyvinylacetats auf einer Carboxylgruppen enthaltenden Polyurethanpfropfgrundlage**

350 g der Polyurethanpfropfgrundlage aus Beispiel 1 werden in einem Rührgefäß vorgelegt und auf eine Temperatur von 85 °C erwärmt. Anschließend wird eine Lösung von 0,66 g 75 gew.-%igem Dibenzoylperoxid in 52,5 g Vinylacetat zugesetzt. Nach dem Einsetzen der Reaktion, die sich durch einen Anstieg der Innentemperatur bemerkbar macht, wird eine Lösung von 5,91 g 75 gew.-%igem Dibenzoylperoxid in 472,5 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.

Ausbeute:

92,5 Gew.-%, bezogen auf eingesetztes Vinylacetat.

M (berechnet): 13794 g/mol

Zusammensetzung des erhaltenen Pfropfpolyvinylacetats (errechnet):

| | |
|---|---|
| 58,12 Gew.-% | Vinylacetateinheiten |
| 3,89 Gew.-% | 2,2-Bis-(hydroxymethyl)-propionsäureeinheiten |
| 37,99 Gew.-% | Polyurethanpfropfgrundlage |

[$\eta$] = 18,9 ml/g, gemessen in Tetrahydrofuran bei 25 °C.

Beispiel 6

**Herstellung eines Pfropfpolyvinylacetats auf einer Carboxylgruppen enthaltenden Polyurethanpfropfgrundlage**

250 g der Polyurethanpfropfgrundlage aus Beispiel 1 werden in einem Rührgefäß vorgelegt und auf eine Temperatur von 85 °C erwärmt. Anschließend wird eine Lösung von 0,94 g 75 gew.-%igem Dibenzoylperoxid in 75 g Vinylacetat zugesetzt. Nach dem Einsetzen der Reaktion, die sich durch einen Anstieg der Innentemperatur bemerkbar macht, wird eine Lösung von 8,44 g 75 gew.-%igem Dibenzoylperoxid in 675 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.

Ausbeute:

95,3 Gew.-%, bezogen auf eingesetztes Vinylacetat.

M (berechnet): 22288 g/mol

Zusammensetzung des erhaltenen Pfropfpolyvinylacetats (errechnet):

| | |
|---|---|
| 74,08 Gew.-% | Vinylacetateinheiten |
| 2,41 Gew.-% | 2,2-Bis-(hydroxymethyl)-propionsäureeinheiten |

23,51 Gew.-% Polyurethanpfropfgrundlage
[η] = 25,2 ml/g, gemessen in Tetrahydrofuran bei 25 °C.

Beispiel 7

**Herstellung eines Pfropfpolyvinylacetats auf einer Carboxylgruppen enthaltenden Polyurethanpfropfgrundlage**

350 g der Polyurethanpfropfgrundlage aus Beispiel 2 werden in einem Rührgefäß vorgelegt und auf eine Temperatur von 85 °C erwärmt. Anschließend wird eine Lösung von 0,66 g 75 gew.-%igem Dibenzoylperoxid in 52,5 g Vinylacetat zugesetzt. Nach dem Einsetzen der Reaktion, die sich durch einen Anstieg der Innentemperatur bemerkbar macht, wird eine Lösung von 5,9 g 75 gew.-%igem Dibenzoylperoxid in 472,5 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.
Ausbeute:
91,4 Gew.-%, bezogen auf eingesetztes Vinylacetat.
M (berechnet): 16051 g/mol
Zusammensetzung des erhaltenen Pfropfpolyvinylacetats (errechnet):
57,83 Gew.-% Vinylacetateinheiten
1,67 Gew.-% 2,2-Bis-(hydroxymethyl)-propionsäureeinheiten
40,50 Gew.-% Polyurethanpfropfgrundlage
[η] = 17,2 ml/g, gemessen in Tetrahydrofuran bei 25 °C.

Beispiel 8

**Herstellung eines Pfropfpolyvinylacetats auf einer Carboxylgruppen enthaltenden Polyurethanpfropfgrundlage**

300 g der Polyurethanpfropfgrundlage aus Beispiel 2 werden in einem Rührgefäß vorgelegt und auf eine Temperatur von 85 °C erwärmt. Anschließend wird eine Lösung von 0,87 g 75 gew.-%igem Dibenzoylperoxid in 69,6 g Vinylacetat zugesetzt. Nach dem Einsetzen der Reaktion, die sich durch einen Anstieg der Innentemperatur bemerkbar macht, wird eine Lösung von 7,83 g 75 gew.-%igem Dibenzoylperoxid in 626,4 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Produkt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.
Ausbeute:
92,7 Gew.-%, bezogen auf eingesetztes Vinylacetat.
M (berechnet): 21325 g/mol
Zusammensetzung des erhaltenen Pfropfpolyvinylacetats (errechnet):
68,26 Gew.-% Vinylacetateinheiten
1,26 Gew.-% 2,2-Bis-(hydroxymethyl)-propionsäureeinheiten
30,48 Gew.-% Polyurethanpfropfgrundlage
[η] = 19,1 ml/g, gemessen in Tetrahydrofuran bei 25 °C.

Beispiel 9

**Herstellung eines Pfropfpolyvinylacetats auf einer Carboxylgruppen enthaltenden Polyurethanpfropfgrundlage**

1736 g der Polyurethanpfropfgrundlage aus Beispiel 3 werden in einem Rührgefäß vorgelegt und auf eine Temperatur von 85 °C erwärmt. Anschließend wird eine Lösung von 3,3 g 75 gew.-%igem Dibenzoylperoxid in 264,5 g Vinylacetat zugesetzt. Nach dem Einsetzen der Reaktion, die sich durch einen Anstieg der Innentemperatur bemerkbar macht, wird eine Lösung von 29,75 g 75 gew.-%igem Dibenzoylperoxid in 2380,5 g Vinylacetat innerhalb von 5 Stunden zugetropft. Hieran schließt sich eine Nachreaktionsphase von 1 Stunde bei einer Temperatur von 100 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Produkt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.

Ausbeute:

92,3 Gew.-%, bezogen auf eingesetztes Vinylacetat.

M (berechnet): 28077 g/mol

Zusammensetzung des erhaltenen Pfropfpolyvinylacetats (errechnet):

| | |
|---|---|
| 58,06 Gew.-% | Vinylacetateinheiten |
| 3,82 Gew.-% | 2,2-Bis-(hydroxymethyl)-propionsäureeinheiten |
| 38,12 Gew.-% | Polyurethanpfropfgrundlage |

[$\eta$] = 24,4 ml/g, gemessen in Tetrahydrofuran bei 25 °C.

Beispiel 10

**Herstellung eines Pfropfpolyvinylacetats auf einer Carboxylgruppen enthaltenden Polyurethanpfropfgrundlage**

1698 g der Polyurethanpfropfgrundlage aus Beispiel 4 werden in einem Rührgefäß vorgelegt und auf eine Temperatur von 85 °C erwärmt. Anschließend wird eine Lösung von 3,18 g 75 gew.-%igem Dibenzoylperoxid in 254,7 g Vinylacetat zugesetzt. Nach dem Einsetzen der Reaktion, die sich durch einen Anstieg der Innentemperatur bemerkbar macht, wird eine Lösung von 28,66 g 75 gew.-%igem Dibenzoylperoxid in 2292,3 g Vinylacetat innerhalb von 5 Stunden zugetropft. Hieran schließt sich eine Nachreaktionsphase von 1 Stunde bei einer Temperatur von 100 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Produkt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.

Ausbeute:

93,2 Gew.-%, bezogen auf eingesetztes Vinylacetat.

M (berechnet): 42614 g/mol

Zusammensetzung des erhaltenen Pfropfpolyvinylacetats (errechnet):

| | |
|---|---|
| 58,3 Gew.-% | Vinylacetateinheiten |
| 3,8 Gew.-% | 2,2-Bis-(hydroxymethyl)-propionsäureeinheiten |
| 37,9 Gew.-% | Polyurethanpfropfgrundlage |

[$\eta$] = 29,6 ml/g, gemessen in Tetrahydrofuran bei 25 °C.

Beispiel 11

**Herstellung eines Pfropfpolyvinylalkohols auf einer Carboxylgruppen enthaltenden Polyurethanpfropfgrundlage**

796,43 g des Pfropfpolyvinylacetats aus Beispiel 5 werden in 796,43 g Methanol gelöst und bei 22 °C mit 133,74 g einer 10 gew.-%igen methanolischen NaOH-Lösung unter Rühren versetzt. Nach ca. 20 Minuten bildet sich ein Gel, welches mechanisch zerkleinert wird. Nach 2 Stunden versetzt man das erhaltene Gelgranulat unter Rühren mit 20 ml Wasser und trocknet das resultierende Polymergranulat unter Vakuum bei 50 °C.

Der erhaltene Pfropfpolyvinylalkohol besitzt einen Hydrolysegrad von 99,3 Mol-%, bezogen auf den Vinylacetateinheitenanteil in dem Ausgangspfropfpolyvinylacetat.

M (in der COOH Form, berechnet): 10442 g/mol

Zusammensetzung des erhaltenen Pfropfpolyvinylalkohols (errechnet):

| | |
|---|---|
| 39,00 Gew.-% | Vinylalkoholeinheiten |
| 55,32 Gew.-% | Polyurethanpfropfgrundlage |
| 5,14 Gew.-% | 2,2-Bis-(hydroxymethyl)-propionsäureeinheiten |

Ergebnis der Ladungstitration (SCD-Methode): 263 µmol COOH/g
Lösungsgeschwindigkeit einer 200 µm dicken Gießfolie aus dem erhaltenen Pfropfpolyvinylalkohol in 10 gew.-%iger wäßriger Natronlauge bei 60 °C: 5,5 Minuten.

Beispiel 12

**Herstellung eines Pfropfpolyvinylalkohols auf einer Carboxylgruppen enthaltenden Polyurethanpfropfgrundlage**

892,76 g des Pfropfpolyvinylacetats aus Beispiel 6 werden in 892,76 g Methanol gelöst und bei 22 °C mit 123,01 g einer 10 gew.-%igen methanolischen NaOH-Lösung unter Rühren versetzt. Nach ca. 15 Minuten bildet sich ein Gel, welches mechanisch zerkleinert wird. Nach 2 Stunden versetzt man das erhaltene Gelgranulat unter Rühren mit 20 ml Wasser und trocknet das resultierende Polymergranulat unter Vakuum bei 50 °C.

Der erhaltene Pfropfpolyvinylalkohol besitzt einen Hydrolysegrad von 98,9 Mol-%, bezogen auf den Vinylacetateinheitenanteil in dem Ausgangspfropfpolyvinylacetat.
M (in der COOH Form, berechnet): 14852 g/mol
Zusammensetzung des erhaltenen Pfropfpolyvinylalkohols (errechnet):

| | |
|---|---|
| 56,27 Gew.-% | Vinylalkoholeinheiten |
| 38,90 Gew.-% | Polyurethanpfropfgrundlage |
| 3,61 Gew.-% | 2,2-Bis-(hydroxymethyl)-propionsäureeinheiten |

Ergebnis der Ladungstitration (SCD-Methode): 175 µmol COOH/g
Lösungsgeschwindigkeit einer 200 µm dicken Gießfolie aus dem erhaltenen Pfropfpolyvinylalkohol in 10 gew.-%iger wäßriger Natronlauge bei 60 °C: 6 Minuten.

Beispiel 13

**Herstellung eines Pfropfpolyvinylalkohols auf einer Carboxylgruppen enthaltenden Polyurethanpfropfgrundlage**

744,98 g des Pfropfpolyvinylacetats aus Beispiel 7 werden in 744,98 g Methanol gelöst und bei 22 °C mit 75,74 g einer 10 gew.-%igen methanolischen NaOH-Lösung unter Rühren versetzt. Nach ca. 25 Minuten bildet sich ein Gel, welches mechanisch zerkleinert wird. Nach 2 Stunden versetzt man das erhaltene Gelgranulat unter Rühren mit 20 ml Wasser und trocknet das resultierende Polymergranulat unter Vakuum bei 50 °C.

Der erhaltene Pfropfpolyvinylalkohol besitzt einen Hydrolysegrad von 99,2 Mol-%, bezogen auf den Vinylacetateinheitenanteil in dem Ausgangspfropfpolyvinylacetat.
M (in der COOH Form, berechnet): 11823 g/mol
Zusammensetzung des erhaltenen Pfropfpolyvinylalkohols (errechnet):

| | |
|---|---|
| 39,85 Gew.-% | Vinylalkoholeinheiten |
| 57,26 Gew.-% | Polyurethanpfropfgrundlage |
| 2,27 Gew.-% | 2,2-Bis-(hydroxymethyl)-propionsäureeinheiten |

Ergebnis der Ladungstitration (SCD-Methode): 100 µmol COOH/g
Lösungsgeschwindigkeit einer 200 µm dicken Gießfolie aus dem erhaltenen Pfropfpolyvinylalkohol in 10 gew.-%iger wäßriger Natronlauge bei 60 °C: 6 Minuten.

Beispiel 14

**Herstellung eines Pfropfpolyvinylalkohols auf einer Carboxylgruppen enthaltenden Polyurethanpfropfgrundlage**

890,26 g des Pfropfpolyvinylacetats aus Beispiel 8 werden in 890,26 g Methanol gelöst und bei 22 °C mit 87,77 g einer 10 gew.-%igen methanolischen NaOH-Lösung unter Rühren versetzt. Nach ca. 20 Minuten bildet sich ein Gel, welches mechanisch zerkleinert wird. Nach 2 Stunden versetzt man das erhaltene

Gelgranulat unter Rühren mit 20 ml Wasser und trocknet das resultierende Polymergranulat unter Vakuum bei 50 °C.

Der erhaltene Pfropfpolyvinylalkohol besitzt einen Hydrolysegrad von 99,3 Mol-%, bezogen auf den Vinylacetateinheitenanteil in dem Ausgangspfropfpolyvinylacetat.

M (in der COOH Form, berechnet): 14537 g/mol

Zusammensetzung des erhaltenen Pfropfpolyvinylalkohols (errechnet):

| | |
|---|---|
| 50,89 Gew.-% | Vinylalkoholeinheiten |
| 41,57 Gew.-% | Polyurethanpfropfgrundlage |
| 1,85 Gew.-% | 2,2-Bis-(hydroxymethyl)-propionsäureeinheiten |

Ergebnis der Ladungstitration (SCD-Methode): 80 µmol COOH/g

Lösungsgeschwindigkeit einer 200 µm dicken Gießfolie aus dem erhaltenen Pfropfpolyvinylalkohol in 10 gew.-%iger wäßriger Natronlauge bei 60 °C: 4,5 Minuten.

Beispiel 15

**Herstellung eines Pfropfpolyvinylalkohols auf einer Carboxylgruppen enthaltenden Polyurethanpfropfgrundlage**

100 g des Propfpolyvinylacetats aus Beispiel 9 werden in 100 g Methanol gelöst und bei 40 °C mit 16,6 g einer 10 gew.- %igen methanolischen NaOH-Lösung, die mit 4,15 g Wasser gemischt wurde, unter Rühren versetzt. Nach ca. 20 Minuten bildet sich ein Gel, welches mechanisch zerkleinert wird. Das erhaltene Gelgranulat wird mit Methanol gewaschen und bei 50 °C unter Vakuum getrocknet.

Der erhaltene Pfropfpolyvinylalkohol besitzt einen Hydrolysegrad von 84,5 Mol-%, bezogen auf den Vinylacetateinheitenanteil in dem Ausgangspfropfpolyvinylacetat.

M (in der COOH Form, berechnet): 22427 g/mol

Zusammensetzung des erhaltenen Pfropfpolyvinylalkohols (errechnet):

| | |
|---|---|
| 31,4 Gew.-% | Vinylalkoholeinheiten |
| 52,5 Gew.-% | Polyurethanpfropfgrundlage |
| 4,8 Gew.-% | 2,2-Bis-(hydroxymethyl)-propionsäureeinheiten |
| 11,3 Gew.-% | Vinylacetateinheiten |

Ergebnis der Ladungstitration (SCD-Methode): 313 µmol COOH/g

Lösungsgeschwindigkeit einer 200 µm dicken Gießfolie aus dem erhaltenen Pfropfpolyvinylalkohol in 10 gew.-%iger wäßriger Natronlauge bei 60 °C: 4,5 Minuten.

Beispiel 16

**Herstellung eines Pfropfpolyvinylalkohols auf einer Carboxylgruppen enthaltenden Polyurethanpfropfgrundlage**

100 g des Pfropfpolyvinylacetats aus Beispiel 10 werden in 100 g Methanol gelöst und bei 40 °C mit 16,6 g einer 10 gew.-%igen methanolischen NaOH-Lösung, die mit 4,15 g Wasser gemischt wurde, unter Rühren versetzt. Nach ca. 20 Minuten bildet sich ein Gel, welches mechanisch zerkleinert wird. Das erhaltene Gelgranulat wird mit Methanol gewaschen und bei 50 °C unter Vakuum getrocknet.

Der erhaltene Pfropfpolyvinylalkohol besitzt einen Hydrolysegrad von 91,8 Mol-%, bezogen auf den Vinylacetateinheitenanteil in dem Ausgangspfropfpolyvinylacetat.

M (in der COOH Form, berechnet): 33090 g/mol

Zusammensetzung des erhaltenen Pfropfpolyvinylalkohols (errechnet):

| | |
|---|---|
| 35,3 Gew.-% | Vinylalkoholeinheiten |
| 53,7 Gew.-% | Polyurethanpfropfgrundlage |
| 4,9 Gew.-% | 2,2-Bis-(hydroxymethyl)-propionsäureeinheiten |
| 6,1 Gew.-% | Vinylacetateinheiten |

Ergebnis der Ladungstitration (SCD-Methode): 345 µmol COOH/g

Lösungsgeschwindigkeit einer 200 µm dicken Gießfolie aus dem erhaltenen Pfropfpolyvinylalkohol in 10 gew.-%iger wäßriger Natronlauge bei 60 °C: 3 Minuten.

Vergleichsbeispiel 1

**Herstellung einer carboxylgruppenfreien Polyurethanpfropfgrundlage**

In einem Reaktionsgefäß mit Rührwerk werden unter Stickstoffatmosphäre 6000 g Polyethylenglykol (M = 600), 386,2 g 1,4-Butandiol und 3 ml N,N-Dimethylpiperazin vorgelegt und auf eine Temperatur von 75 °C erwärmt. Anschließend werden innerhalb von 5 Stunden 2856,4 g Isophorondiisocyanat solchermaßen zugetropft, daß die Temperatur der Reaktionsmischung 100 °C nicht überschreitet. Zur Vervollständigung der Reaktion wird das Reaktionsgemisch eine weitere Stunde bei 80 °C gerührt.

Die Vollständigkeit des Umsatzes und damit das Ende der Reaktion wird durch Analyse des Diisocyanatverbrauchs nach üblichen Methoden (IR-Spektroskopie, Titration) ermittelt.

Das erhaltene Polymere besitzt ein errechnetes Molekulargewicht M von 6471 g/mol. Die Grenzviskositätszahl [$\eta$] beträgt 11,8 ml/g, ermittelt in methanolischer Lösung im Ostwald-Viskosimeter bei 25 °C.

Vergleichsbeispiel 2

**Herstellung einer carboxylgruppenfreien Polyurethanpfropfgrundlage**

Reaktionsführung analog Vergleichsbeispiel 1. Es werden 3000 g Polyethylenglykol (M = 600), 193,1 g 1,4-Butandiol, 1,5 ml N,N-Dimethylpiperazin und 1534,9 g Isophorondiisocyanat zur Umsetzung gebracht.

Das resultierende Polymere besitzt ein errechnetes Molekulargewicht M von 19858 g/mol. Die Grenzviskositätszahl [$\eta$] beträgt 16,9 ml/g, ermittelt in methanolischer Lösung im Ostwald-Viskosimeter bei 25 °C.

Vergleichsbeispiel 3

**Herstellung eines Pfropfpolyvinylacetats auf einer carboxylgruppenfreien Polyurethanpfropfgrundlage**

2847 g der Polyurethanpfropfgrundlage aus Vergleichsbeispiel 1 werden in einem Rührgefäß vorgelegt und auf eine Temperatur von 85 °C erwärmt. Anschließend wird eine Lösung von 4,95 g 75 gew.-%igem Dibenzoylperoxid in 660,5 g Vinylacetat zugesetzt. Nach dem Einsetzen der Reaktion, die sich durch einen Anstieg der Innentemperatur bemerkbar macht, wird eine Lösung von 44,58 g 75 gew.-%igem Dibenzoylperoxid in 5944,5 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.

Ausbeute:

95,0 Gew.-%, bezogen auf eingesetztes Vinylacetat.

M (berechnet): 20727 g/mol

Zusammensetzung des erhaltenen Pfropfpolyvinylacetats (errechnet):

68,8 Gew.-% Vinylacetateinheiten

31,2 Gew.-% Polyurethanpfropfgrundlage

Vergleichsbeispiel 4

**Herstellung eines Pfropfpolyvinylacetats auf einer carboxylgruppenfreien Polyurethanpfropfgrundlage**

3000 g der Polyurethanpfropfgrundlage aus Vergleichsbeispiel 1 werden in einem Rührgefäß vorgelegt und auf eine Temperatur von 85 °C erwärmt. Anschließend wird eine Lösung von 3,38 g 75 gew.-%igem Dibenzoylperoxid in 450 g Vinylacetat zugesetzt. Nach dem Einsetzen der Reaktion, die sich durch einen Anstieg der Innentemperatur bemerkbar macht, wird eine Lösung von 30,38 g 75 gew.-%igem Dibenzoylperoxid in 4050 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren, wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.

Ausbeute:
96,7 Gew.-%, bezogen auf eingesetztes Vinylacetat.
M (berechnet): 15859 g/mol
Zusammensetzung des erhaltenen Pfropfpolyvinylacetats (errechnet):
59,2 Gew.-% Vinylacetateinheiten
40,8 Gew.-% Polyurethanpfropfgrundlage

Vergleichsbeispiel 5

**Herstellung eines Pfropfpolyvinylacetats auf einer carboxylgruppenfreien Polyurethanpfropfgrundlage**

450 g der Polyurethanpfropfgrundlage aus Vergleichsbeispiel 1 werden in einem Rührgefäß vorgelegt und auf eine Temperatur von 85 °C erwärmt. Anschließend wird eine Lösung von 0,57 g 75 gew.-%igem Dibenzoylperoxid in 76,5 g Vinylacetat zugesetzt. Nach dem Einsetzen der Reaktion, die sich durch einen Anstieg der Innentemperatur bemerkbar macht, wird eine Lösung von 5,16 g 75 gew.-%igem Dibenzoylperoxid in 688,5 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.
Ausbeute:
96,8 Gew.-% , bezogen auf eingesetztes Vinylacetat.
M (berechnet): 17119 g/mol
Zusammensetzung des erhaltenen Pfropfpolyvinylacetats (errechnet):
59,2 Gew.-% Vinylacetateinheiten
40,8 Gew.-% Polyurethanpfropfgrundlage

Vergleichsbeispiel 6

**Herstellung eines Pfropfpolyvinylacetats auf einer carboxylgruppenfreien Polyurethanpfropfgrundlage**

1500 g der Polyurethanpfropfgrundlage aus Vergleichsbeispiel 2 werden in einem Rührgefäß vorgelegt und auf eine Temperatur von 85 °C erwärmt. Anschließend wird eine Lösung von 2,61 g 75 gew.-%igem Dibenzoylperoxid in 348 g Vinylacetat zugesetzt. Nach dem Einsetzen der Reaktion, die sich durch einen Anstieg der Innentemperatur bemerkbar macht, wird eine Lösung von 23,49 g 75 gew.-%igem Dibenzoylperoxid in 3132 g Vinylacetat innerhalb von 5 Stunden zugetropft. Hieran schließt sich eine Nachreaktionsphase von 1 Stunde bei einer Temperatur von 98 °C an. Anschließend wird das Reaktionsgemisch mit Methanol verdünnt und nicht umgesetztes Monomeres durch azeotrope Destillation mit Methanol entfernt. Die Bestimmung des Restmonomergehaltes erfolgt nach literaturbekannten Methoden. Um das Reaktionsprodukt zu isolieren wird die Reaktionsmischung in Wasser ausgefällt und das erhaltene Pfropfpolymere unter Vakuum bei 50 °C getrocknet. Alternativ kann das Pfropfpolyvinylacetat auch durch vollständige destillative Entfernung des Methanols aus der Reaktionsmischung erhalten werden.
Ausbeute:
92,7 Gew.-%, bezogen auf eingesetztes Vinylacetat.
M (berechnet): 62574 g/mol
Zusammensetzung des erhaltenen Pfropfpolyvinylacetats (errechnet):
68,3 Gew.-% Vinylacetateinheiten
31,7 Gew.-% Polyurethanpfropfgrundlage

Vergleichsbeispiel 7

**Herstellung eines Pfropfpolyvinylalkohols auf einer carboxylgruppenfreien Polyurethanpfropfgrundlage**

865,8 g des Pfropfpolyvinylacetats aus Vergleichsbeispiel 3 werden in 865,8 g Methanol gelöst und bei 22 °C mit 32,49 g einer 10 gew.-%igen methanolischen NaOH-Lösung, die mit 32,49 g Wasser gemischt wurde, unter Rühren versetzt. Nach ca. 50 Minuten bildet sich ein Gel, welches mechanisch zerkleinert wird. Das erhaltene Gelgranulat wird mit Methanol gewaschen und bei 50 °C unter Vakuum getrocknet.

Der erhaltene Pfropfpolyvinylalkohol besitzt einen Hydrolysegrad von 85,5 Mol-%, bezogen auf den Vinylacetateinheitenanteil in dem Ausgangspfropfpolyvinylacetat.
M (berechnet): 14776 g/mol
Zusammensetzung des erhaltenen Pfropfpolyvinylalkohols (errechnet):

| | |
|---|---|
| 42,2 Gew.-% | Vinylalkoholeinheiten |
| 43,8 Gew.-% | Polyurethanpfropfgrundlage |
| 14,0 Gew.-% | Vinylacetateinheiten |

Ergebnis der Ladungstitration (SCD-Methode): < 10 µmol COOH/g
Lösungsgeschwindigkeit einer 200 µm dicken Gießfolie des Pfropfpolyvinylalkohols in 10 gew.-%iger wäßriger Natronlauge bei 60 °C: 8 Minuten.

Vergleichsbeispiel 8

**Herstellung eines Pfropfpolyvinylalkohols auf einer carboxylgruppenfreien Polyurethanpfropfgrundlage**

100 g des Pfropfpolyvinylacetats aus Vergleichsbeispiel 4 werden in 100 g Methanol gelöst und bei 22 °C mit 6,84 g einer 10 gew.-%igen methanolischen NaOH-Lösung unter Rühren versetzt. Nach ca. 16 Minuten bildet sich ein Gel, welches mechanisch zerkleinert wird. Das erhaltene Gelgranulat wird mit Methanol gewaschen und bei 50 °C unter Vakuum getrocknet.

Der erhaltene Pfropfpolyvinylalkohol besitzt einen Hydrolysegrad von 95 Mol-%, bezogen auf den Vinylacetateinheitenanteil in dem Ausgangspfropfpolyvinylacetat.
M (berechnet): 12180 g/mol
Zusammensetzung des erhaltenen Pfropfpolyvinylalkohols (errechnet):

| | |
|---|---|
| 42,5 Gew.-% | Vinylalkoholeinheiten |
| 53,1 Gew.-% | Polyurethanpfropfgrundlage |
| 4,4 Gew.-% | Vinylacetateinheiten |

Ergebnis der Ladungstitration (SCD-Methode): < 10 µmol COOH/g
Lösungsgeschwindigkeit einer 200 µm dicken Gießfolie des Pfropfpolyvinylalkohols in 10 gew.-%iger wäßriger Natronlauge bei 60 °C: 15 Minuten.

Vergleichsbeispiel 9

**Herstellung eines Pfropfpolyvinylalkohols auf einer carboxylgruppenfreien Polyurethanpfropfgrundlage**

67,6 g des Propfpolyvinylacetats aus Vergleichsbeispiel 5 werden in 67,6 g Methanol gelöst und bei 22 °C mit 4,29 g einer 10 gew.-%igen methanolischen NaOH-Lösung unter Rühren versetzt. Nach ca. 14 Minuten bildet sich ein Gel, welches mechanisch zerkleinert wird. Das erhaltene Gelgranulat wird mit Methanol gewaschen und bei 50 °C unter Vakuum getrocknet.

Der erhaltene Pfropfpolyvinylalkohol besitzt einen Hydrolysegrad von 98 Mol-%, bezogen auf den Vinylacetateinheitenanteil in dem Ausgangspfropfpolyvinylacetat.
M (berechnet): 11365 g/mol
Zusammensetzung des erhaltenen Pfropfpolyvinylalkohols (errechnet):

| | |
|---|---|
| 41,4 Gew.-% | Vinylalkoholeinheiten |
| 56,9 Gew.-% | Polyurethanpfropfgrundlage |
| 1,7 Gew.-% | Vinylacetateinheiten |

Ergebnis der Ladungstitration (SCD-Methode): < 10 µmol COOH/g
Lösungsgeschwindigkeit einer 200 µm dicken Gießfolie des Pfropfpolyvinylalkohols in 10 gew.-%iger wäßriger Natronlauge bei 60 °C: 8 Minuten.

Vergleichsbeispiel 10

**Herstellung eines Pfropfpolyvinylalkohols auf einer carboxylgruppenfreien Polyurethanpfropf-**

**grundlage**

4375 g des Propfpolyvinylacetats aus Vergleichsbeispiel 6 werden in 4375 g Methanol gelöst und bei 22 °C mit 266,9 g einer 10 gew.-%igen methanolischen NaOH-Lösung unter Rühren versetzt. Nach ca. 11 Minuten bildet sich ein Gel, welches mechanisch zerkleinert wird. Das erhaltene Gelgranulat wird mit Methanol gewaschen und bei 50 °C unter Vakuum getrocknet.

Der erhaltene Pfropfpolyvinylalkohol besitzt einen Hydrolysegrad von 98,4 Mol-%, bezogen auf den Vinylacetateinheitenanteil in dem Ausgangspfropfpolyvinylacetat.

M (berechnet): 42051 g/mol

Zusammensetzung des erhaltenen Pfropfpolyvinylalkohols (errechnet):

| | |
|---|---|
| 51,2 Gew.-% | Vinylalkoholeinheiten |
| 47,2 Gew.-% | Polyurethanpfropfgrundlage |
| 1,6 Gew.-% | Vinylacetateinheiten |

Ergebnis der Ladungstitration (SCD-Methode): < 10 µmol COOH/g

Lösungsgeschwindigkeit einer 200 µm dicken Gießfolie des Pfropfpolyvinylalkohols in 10 gew.-%iger wäßriger Natronlauge bei 60 °C: 15 Minuten.

In der Tabelle 1 sind der Carboxylgruppengehalt der Polymeren und das Löslichkeitsverhalten von 200 µm dicken Gießfolien aus nicht gepfropften Polyvinylalkoholen und Pfropfpolyvinylalkoholen in 10 gew.-%iger wäßriger Natronlauge bei 60 °C zusammengefaßt wiedergegeben. Das Ergebnis zeigt das überraschend vorteilhafte Löslichkeitsverhalten erfindungsgemäßer Carboxylgruppen enthaltender Pfropfpolyvinylalkohole der Beispiele 11 bis 16, das deutlich besser ist als dasjenige von carboxylgruppenfreien Pfropfpolyvinylalkoholen der Vergleichsbeispiele 7 bis 10 und überraschend besser als dasjenige von carboxylgruppenhaltigem handelsüblichem Polyvinylalkohol (Gohsenol T 330, Hersteller: Nippon Gohsei, Japan). Demgegenüber zeigt nicht gepfropfter handelsüblicher Polyvinylalkohol ([R] Mowiol 8-88 und 20-98, Hersteller: Hoechst AG) praktisch keine Löslichkeit in 10 gew.-%iger wäßriger Natronlauge bei 60 °C. Die für die Löslichkeitsversuche verwendeten 200 µm dicken Gießfolien werden aus den Polyvinylalkoholen (PVAL) bzw. Pfropfpolyvinylalkoholen (Pfropf-PVAL) wie folgt hergestellt: 15,8 g einer 10 gew.-%igen wäßrigen PVAL- bzw. Pfropf-PVAL-Lösung werden in eine horizontal angeordnete flache, kreisrunde Form mit einem Durchmesser von 10,7 cm gegossen und bei 70 °C getrocknet. Die dabei resultierende Gießfolie besitzt in getrocknetem Zustand eine Schichtdicke von ca. 200 µm und wird als solche unmittelbar für die Löslichkeitsversuche in 10 gew.-%iger wäßriger Natronlauge von 60 °C verwendet. Gemessen wird die Zeit (Minuten) vom Eintauchen bis zur vollständigen Auflösung der Folienprobe in der wäßrigen Natronlauge von 60 °C.

Der Carboxylgruppengehalt der Polymeren wird durch Ladungstitration an wäßrigen Polymerlösungen nach der SCD-Methode in üblicher Weise ermittelt.

**Tabelle 1:**

Löslichkeit von Polyvinylalkoholen (PVAL) bzw. Pfropfpolyvinylalkoholen (Pfropf-PVAL) in wäßriger Natronlauge

| PVAL-bzw.Pfropf-PVAL-Gießfolien aus | Carboxylgruppengehalt des Polymeren (µmol COOH/g Polymerisat) | Lösungsgeschwindigkeit der Gießfolien (200 µm dick) in 10 gew.%-iger wäßriger Natronlauge bei 60 °C (Minuten) |
|---|---|---|
| Mowiol 8 - 88 | < 10 | nicht löslich nach 90 min |
| Mowiol 20 - 98 | < 10 | nicht löslich nach 90 min |
| Gohsenol T 330 | 563 | gelöst nach 19 min |
| Vergleichsbsp. 7 | < 10 | " nach 8 min |
| Vergleichsbsp. 8 | < 10 | " nach 15 min |
| Vergleichsbsp. 9 | < 10 | " nach 8 min |
| Vergleichsbsp. 10 | < 10 | " nach 15 min |
| Beispiel 11 | 263 | " nach 5,5 min |
| Beispiel 12 | 175 | " nach 6 min |
| Beispiel 13 | 100 | " nach 6 min |
| Beispiel 14 | 80 | " nach 4,5 min |
| Beispiel 15 | 313 | " nach 4,5 min |
| Beispiel 16 | 345 | " nach 3 min |

## Patentansprüche

1. Carboxylgruppen enthaltende Pfropfpolymerisate auf einer Polyurethanpfropfgrundlage, wobei die Pfropfgrundlage mindestens 2 Urethangruppen im Molekül und Einheiten aus Diisocyanaten und

gegebenenfalls geringen Mengen monofunktionellen Isocyanaten sowie Einheiten aus Diolen und gegebenenfalls geringen Mengen Monohydroxyverbindungen enthält und auf die Polyurethanpfropfgrundlage Polymerreste aus Einheiten von Carbonsäurevinylestern mit 3 bis 20 C-Atomen und/oder deren Verseifungsprodukten und gegebenenfalls von weiteren ethylenisch ungesättigten und gegebenenfalls copolymerisierten Monomeren und/oder gegebenenfalls deren Verseifungsprodukten aufgepfropft sind, dadurch gekennzeichnet, daß die Polyurethanpfropfgrundlagenmoleküle Einheiten aus carboxylgruppenhaltigen Dimethylol- oder Polymethylolverbindungen, vorzugsweise Dimethylolverbindungen, enthalten und die Pfropfpolymerisate in ihrer Säureform oder einer Salzform oder einer teilneutralisierten Form vorliegen.

**2.** Pfropfpolymerisate nach Anspruch 1, dadurch gekennzeichnet, daß die Polyurethanpfropfgrundlagenmoleküle Einheiten aus Dimethylolcarbonsäuren der Formel I,

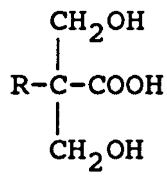

(I)

worin R = ($C_1$-$C_4$)-Alkyl oder ($C_6$-$C_{12}$)-Aryl, vorzugsweise Methyl, bedeutet, enthalten.

**3.** Pfropfpolymerisate nach Anspruch 1 und/oder 2, dadurch gekennzeichnet, daß in den Polyurethanpfropfgrundlagenmolekülen das Molverhältnis der Einheiten aus carboxylgruppenhaltigen Diolen oder Polyolen zu den übrigen in den Polyurethanpfropfgrundlagenmolekülen enthaltenen Monomereinheiten
1 : X bis 1 : 1 mit $X \geqq 30$, vorzugsweise
1 : 30 bis 1 : 1,8, insbesondere 1 : 5,4 bis 1 : 2,7, beträgt.

**4.** Pfropfpolymerisate nach einem oder mehreren der Ansprüche 1 bis 3, dadurch gekennzeichnet, daß die Polyurethanpfropfgrundlagenmoleküle ein Molekulargewicht zwischen 200 und 50000 g/mol besitzen.

**5.** Pfropfpolymerisate nach einem oder mehreren der Ansprüche 1 bis 4, dadurch gekennzeichnet, daß die Polyurethanpfropfgrundlagenmoleküle Einheiten aus aromatischen und/oder aliphatischen und/oder cycloaliphatischen Diisocyanaten, vorzugsweise Hexamethylendiisocyanat- und/oder Isophorondiisocyanateinheiten, enthalten.

**6.** Pfropfpolymerisate nach einem oder mehreren der Ansprüche 1 bis 5, dadurch gekennzeichnet, daß die Polyurethanpfropfgrundlagenmoleküle in der Diolkomponente Einheiten aus Alkylenglykol und/oder Polyalkylenglykol, vorzugsweise Polyethylenglykol mit einem Molekulargewicht zwischen 200 und 10000 g/mol, oder Gemische aus diesen Einheiten enthalten.

**7.** Pfropfpolymerisate nach einem oder mehreren der Ansprüche 1 bis 6, dadurch gekennzeichnet, daß die Polyurethanpfropfgrundlagenmoleküle in der Diolkomponente außer den Einheiten aus carboxylgruppenhaltigen Diolen Einheiten aus carboxylgruppenfreien niedermolekularen Diolen, vorzugsweise aus der Gruppe Butandiole, Propandiole, Ethylenglykol, Diethylenglykol, Triethylenglykol oder Ethylenpropylenglykole, enthalten.

**8.** Pfropfpolymerisate nach einem oder mehreren der Ansprüche 1 bis 7, dadurch gekennzeichnet, daß die Polyurethanpfropfgrundlagenmoleküle als Endgruppen niedere Alkoxyreste und/oder Hydroxylgruppen enthalten.

**9.** Pfropfpolymerisate nach einem oder mehreren der Ansprüche 1 bis 8, dadurch gekennzeichnet, daß endständige OH-Gruppen der Polyurethanpfropfgrundlagenmoleküle durch angelagerte Monoisocyanate maskiert oder blockiert sind.

**10.** Pfropfpolymerisate nach einem oder mehreren der Ansprüche 1 bis 7, dadurch gekennzeichnet, daß

auf die Polyurethanpfropfgrundlagenmoleküle Polymerreste aus Vinylacetat und/oder Vinylpropionat, vorzugsweise Vinylacetat, in Mengen von 10 bis 95 Gew.-%, bezogen auf das Pfropfpolymerisat und/oder deren Verseifungsprodukten, aufgepfropft sind.

**11.** Pfropfpolymerisate nach einem oder mehreren der Ansprüche 1 bis 10, dadurch gekennzeichnet, daß auf die Polyurethanpfropfgrundlagenmoleküle Polymerreste aus Vinylacetat und/oder Vinylpropionat und Versaticsäurevinylester und/oder deren Verseifungsprodukten aufgepfropft sind.

**12.** Pfropfpolymerisate nach einem oder mehreren der Ansprüche 1 bis 11, dadurch gekennzeichnet, daß auf die Polyurethanpfropfgrundlagenmoleküle Polymerreste aus Vinylestern und weiteren mit den Vinylestern gegebenenfalls copolymerisierten ethylenisch ungesättigten Monomeren und/oder deren Verseifungsprodukten aufgepfropft sind.

**13.** Pfropfpolymerisate nach einem oder mehreren der Ansprüche 1 bis 11, dadurch gekennzeichnet, daß die in den auf die Polyurethanpfropfgrundlagenmoleküle aufgepfropften Polymerresten enthaltenen Vinylestereinheiten und gegebenenfalls weiteren aufgepfropften und verseifbaren ethylenisch ungesättigten Monomereinheiten teilweise bis vollständig verseift sind.

**14.** Verfahren zur Herstellung von Carboxylgruppen enthaltenden Pfropfpolymerisaten nach einem oder mehreren der Ansprüche 1 bis 13 durch radikalisch initiierte Pfropfpolymerisation von ethylenisch ungesättigten polymerisationsfähigen Monomeren in Lösung oder in Substanz auf eine Polyurethanpfropfgrundlage und anschließende Isolierung der Pfropfpolymerisate oder anschließende Verseifung von hydrolysierbaren Monomereinheiten in den aufgepfropften Polymerresten und Isolierung der Verseifungsprodukte, dadurch gekennzeichnet, daß als Pfropfgrundlage Carboxylgruppen enthaltende Polyurethane nach einem oder mehreren der Ansprüche 1 bis 9 verwendet und als aufzupfropfende Monomere Carbonsäurevinylester mit 3 bis 20 C-Atomen und gegebenenfalls weitere ethylenisch ungesättigte polymerisationsfähige Monomere, die gegebenenfalls copolymerisationsfähig sind, in Mengen von 10 bis 95 Gew.-%, bezogen auf das Pfropfpolymerisat, eingesetzt werden, wobei die Monomeren unter Mischen mit der Pfropfgrundlage und Zusatz radikalischer Initiatoren radikalisch polymerisiert und anschließend die resultierenden Pfropfpolymerisate isoliert oder in den aufgepfropften Polymerresten der resultierenden Pfropfpolymerisate die Vinylestereinheiten und gegebenenfalls weitere verseifbare Monomereinheiten teilweise oder vollständig durch Hydrolyse und/oder Alkoholyse verseift und die erhaltenen Pfropfpolymerisate in ihrer Säureform oder einer Salzform oder einer teilneutralisierten Form isoliert werden.

**15.** Verfahren nach Anspruch 14, dadurch gekennzeichnet, daß als aufzupfropfende Vinylestermonomere Vinylacetat und/oder Vinylpropionat, vorzugsweise Vinylacetat, und gegebenenfalls Versaticsäurevinylester verwendet werden.

**16.** Verfahren nach Anspruch 14 und/oder 15, dadurch gekennzeichnet, daß die zu pfropfenden Monomeren im Gemisch mit der Pfropfgrundlage oder unter Zudosierung in die vorgelegte Pfropfgrundlage der Polymerisation zugeführt werden.

**17.** Verfahren nach einem oder mehreren der Ansprüche 14 bis 16, dadurch gekennzeichnet, daß die Pfropfpolymerisation in alkoholischer Lösung durchgeführt wird.

**18.** Verfahren nach einem oder mehreren der Ansprüche 14 bis 17, dadurch gekennzeichnet, daß die teilweise oder vollständige Verseifung der Vinylestereinheiten in den aufgepfropften Polymerresten unter Zusatz von niederen Alkoholen, gegebenenfalls in Mischung mit Wasser, und alkalischer oder gegebenenfalls saurer Katalyse bei Temperaturen unterhalb von 160 °C, vorzugsweise unterhalb von 100 °C, durchgeführt wird.

**19.** Verwendung von nicht verseiften Pfropfpolymerisaten nach einem oder mehreren der Ansprüche 1 bis 13 als Schmelzklebstoff oder in Verbindung mit Lösungsmitteln als lösungsmittelhaltige Klebstoffe, gegebenenfalls unter Mitverwendung von Vernetzungsmitteln, für die Verklebung diverser Materialien wie Metalle, keramische Materialien, Kunststoffe, Fasern, Folien, Textilien, Papier, Holz, ferner zur Herstellung von Folien durch thermoplastische Verformung oder zur Herstellung von Beschichtungen.

**20.** Verwendung verseifter und/oder teilverseifter Pfropfpolymerisate nach einem oder mehreren der Ansprüche 1 bis 13 als Klebstoff sowie als Ausgangsmaterial für Gieß-, Preß- oder Extrusionsfolien, als Schlichtemittel und Schmälzmittel bei der Textilverarbeitung sowie zur Herstellung von wasserlöslichen Folienverpackungsbeuteln.

**Patentansprüche für folgenden Vertragstaat : (ES)**

**1.** Verfahren zur Herstellung von Carboxylgruppen enthaltenden Pfropfpolymerisaten auf einer Polyurethanpfropfgrundlage, wobei die Pfropfgrundlage mindestens 2 Urethangruppen im Molekül und Einheiten aus Diisocyanaten und gegebenenfalls geringen Mengen monofunktionellen Isocyanaten sowie Einheiten aus Diolen und gegebenenfalls geringen Mengen Monohydroxyverbindungen enthält und auf die Polyurethanpfropfgrundlage Polymerreste aus Einheiten von Carbonsäurevinylestern mit 3 bis 20 C-Atomen und/oder deren Verseifungsprodukten und gegebenenfalls von weiteren ethylenisch ungesättigten und gegebenenfalls copolymerisierten Monomeren und/oder gegebenenfalls deren Verseifungsprodukten aufgepfropft sind, die Polyurethanpfropfgrundlagenmoleküle Einheiten aus carboxylgruppenhaltigen Dimethylol- oder Polymethylolverbindungen, vorzugsweise Dimethylolverbindungen, enthalten und die Pfropfpolymerisate in ihrer Säureform oder einer Salzform oder einer teilneutralisierten Form erhalten werden, durch radikalisch initiierte Pfropfpolymerisation von ethylenisch ungesättigten polymerisationsfähigen Monomeren in Lösung oder in Substanz auf eine Polyurethanpfropfgrundlage und anschließende Isolierung der Pfropfpolymerisate oder anschließende Verseifung von hydrolysierbaren Monomereinheiten in den aufgepfropften Polymerresten und Isolierung der Verseifungsprodukte, dadurch gekennzeichnet, daß als Pfropfgrundlage Carboxylgruppen enthaltende Polyurethane verwendet und als aufzupfropfende Monomere Carbonsäurevinylester mit 3 bis 20 C-Atomen und gegebenenfalls weitere ethylenisch ungesättigte polymerisationsfähige Monomere, die gegebenenfalls copolymerisationsfähig sind, in Mengen von 10 bis 95 Gew.-%, bezogen auf das Pfropfpolymerisat, eingesetzt werden, wobei die Monomeren unter Mischen mit der Pfropfgrundlage und Zusatz radikalischer Initiatoren radikalisch polymerisiert und anschließend die resultierenden Pfropfpolymerisate isoliert oder in den aufgepfropften Polymerresten der resultierenden Pfropfpolymerisate die Vinylestereinheiten und gegebenenfalls weitere verseifbare Monomereinheiten teilweise oder vollständig durch Hydrolyse und/oder Alkoholyse verseift und die erhaltenen Pfropfpolymerisate in ihrer Säureform oder einer Salzform oder einer teilneutralisierten Form isoliert werden.

**2.** Verfahren nach Anspruch 1, dadurch gekennzeichnet, daß die Polyurethanpfropfgrundlagenmoleküle Einheiten aus Dimethylolcarbonsäuren der Formel I,

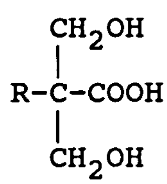

(I)

worin R = ($C_1$-$C_4$)-Alkyl oder ($C_6$-$C_{12}$)-Aryl, vorzugsweise Methyl, bedeutet, enthalten.

**3.** Verfahren nach Anspruch 1 und/oder 2, dadurch gekennzeichnet, daß in den Polyurethanpfropfgrundlagenmolekülen das Molverhältnis der Einheiten aus carboxylgruppenhaltigen Diolen oder Polyolen zu den übrigen in den Polyurethanpfropfgrundlagenmolekülen enthaltenen Monomereinheiten
1 : X bis 1 : 1 mit $X \geqq 30$, vorzugsweise
1 : 30 bis 1 : 1,8, insbesondere 1 : 5,4 bis 1 : 2,7, beträgt.

**4.** Verfahren nach einem oder mehreren der Ansprüche 1 bis 3, dadurch gekennzeichnet, daß die Polyurethanpfropfgrundlagenmoleküle ein Molekulargewicht zwischen 200 und 50000 g/mol besitzen.

**5.** Verfahren nach einem oder mehreren der Ansprüche 1 bis 4, dadurch gekennzeichnet, daß die Polyurethanpfropfgrundlagenmoleküle Einheiten aus aromatischen und/oder aliphatischen und/oder cycloaliphatischen Diisocyanaten, vorzugsweise Hexamethylendiisocyanat- und/oder Isophorondiisocyanateinheiten, enthalten.

6. Verfahren nach einem oder mehreren der Ansprüche 1 bis 5, dadurch gekennzeichnet, daß die Polyurethanpfropfgrundlagenmoleküle in der Diolkomponente Einheiten aus Alkylenglykol und/oder Polyalkylenglykol, vorzugsweise Polyethylenglykol mit einem Molekulargewicht zwischen 200 und 10000 g/mol, oder Gemische aus diesen Einheiten enthalten.

7. Verfahren nach einem oder mehreren der Ansprüche 1 bis 6, dadurch gekennzeichnet, daß die Polyurethanpfropfgrundlagenmoleküle in der Diolkomponente außer den Einheiten aus carboxylgruppenhaltigen Diolen Einheiten aus carboxylgruppenfreien niedermolekularen Diolen, vorzugsweise aus der Gruppe Butandiole, Propandiole, Ethylenglykol, Diethylenglykol, Triethylenglykol oder Ethylenpropylenglykole, enthalten.

8. Verfahren nach einem oder mehreren der Ansprüche 1 bis 7, dadurch gekennzeichnet, daß die Polyurethanpfropfgrundlagenmoleküle als Endgruppen niedere Alkoxyreste und/oder Hydroxylgruppen enthalten.

9. Verfahren nach einem oder mehreren der Ansprüche 1 bis 8, dadurch gekennzeichnet, daß endständige OH-Gruppen der Polyurethanpfropfgrundlagenmoleküle durch angelagerte Monoisocyanate maskiert oder blockiert sind.

10. Verfahren nach einem oder mehreren der Ansprüche 1 bis 7, dadurch gekennzeichnet, daß auf die Polyurethanpfropfgrundlagenmoleküle Polymerreste aus Vinylacetat und/oder Vinylpropionat, vorzugsweise Vinylacetat, in Mengen von 10 bis 95 Gew.-%, bezogen auf das Pfropfpolymerisat und/oder deren Verseifungsprodukten, aufgepfropft werden.

11. Verfahren nach einem oder mehreren der Ansprüche 1 bis 10, dadurch gekennzeichnet, daß auf die Polyurethanpfropfgrundlagenmoleküle Polymerreste aus Vinylacetat und/oder Vinylpropionat und Versaticsäurevinylester aufgepfropft werden.

12. Verfahren nach einem oder mehreren der Ansprüche 1 bis 11, dadurch gekennzeichnet, daß auf die Polyurethanpfropfgrundlagenmoleküle Polymerreste aus Vinylestern und weiteren mit den Vinylestern gegebenenfalls copolymerisierbaren ethylenisch ungesättigten Monomeren aufgepfropft werden.

13. Verfahren nach einem oder mehreren der Ansprüche 1 bis 12, dadurch gekennzeichnet, daß die in den auf die Polyurethanpfropfgrundlagenmoleküle aufgepfropften Polymerresten enthaltenen Vinylestereinheiten und gegebenenfalls weiteren aufgepfropften und verseifbaren ethylenisch ungesättigten Monomereinheiten teilweise bis vollständig verseift werden.

14. Verfahren nach einem oder mehreren der Ansprüche 1 bis 13, dadurch gekennzeichnet, daß die zu pfropfenden Monomeren im Gemisch mit der Pfropfgrundlage oder unter Zudosierung in die vorgelegte Pfropfgrundlage der Polymerisation zugeführt werden.

15. Verfahren nach einem oder mehreren der Ansprüche 1 bis 14, dadurch gekennzeichnet, daß die Pfropfpolymerisation in alkoholischer Lösung durchgeführt wird.

16. Verfahren nach einem oder mehreren der Ansprüche 1 bis 15, dadurch gekennzeichnet, daß die teilweise oder vollständige Verseifung der Vinylestereinheiten in den aufgepfropften Polymerresten unter Zusatz von niederen Alkoholen, gegebenenfalls in Mischung mit Wasser, und alkalischer oder gegebenenfalls saurer Katalyse bei Temperaturen unterhalb von 160 °C, vorzugsweise unterhalb von 100 °C, durchgeführt wird.

17. Verwendung von nicht verseiften Pfropfpolymerisaten nach einem oder mehreren der Ansprüche 1 bis 12, 14 und 15, als Schmelzklebstoff oder in Verbindung mit Lösungsmitteln als lösungsmittelhaltige Klebstoffe, gegebenenfalls unter Mitverwendung von Vernetzungsmitteln, für die Verklebung diverser Materialien wie Metalle, keramische Materialien, Kunststoffe, Fasern, Folien, Textilien, Papier, Holz, ferner zur Herstellung von Folien durch thermoplastische Verformung oder zur Herstellung von Beschichtungen.

18. Verwendung verseifter und/oder teilverseifter Pfropfpolymerisat nach einem oder mehreren der Ansprüche 1 bis 16 als Klebstoff sowie als Ausgangsmaterial für Gieß-, Preß- oder Extrusionsfolien, als Schlichtemittel und Schmälzmittel bei der Textilverarbeitung sowie zur Herstellung von wasserlöslichen Folienverpackungsbeuteln.